(19) **Europäisches Patentamt / European Patent Office / Office européen des brevets**

(11) **EP 4 189 602 B1**

(12) **FASCICULE DE BREVET EUROPEEN**

(45) Date de publication et mention
de la délivrance du brevet:
**22.04.2026 Bulletin 2026/17**

(21) Numéro de dépôt: **21745370.3**

(22) Date de dépôt: **29.06.2021**

(51) Classification Internationale des Brevets (IPC):
**G06N 3/088** (2023.01)     **G05B 19/418** (2006.01)
**G06N 3/045** (2023.01)     **G06N 3/0464** (2023.01)
**G06N 3/09** (2023.01)      **G06T 7/00** (2017.01)
**G06V 10/82** (2022.01)

(52) Classification Coopérative des Brevets (CPC):
**G06N 3/088; G05B 19/41875; G06N 3/045;
G06N 3/0455; G06N 3/0464; G06N 3/09;
G06N 3/094; G06T 7/0004; G06V 10/82;**
G05B 2219/32179; G05B 2219/32193;
G06T 2207/10072; G06T 2207/10116;
G06T 2207/10132; G06T 2207/20081;     (Cont.)

(86) Numéro de dépôt international:
**PCT/FR2021/051190**

(87) Numéro de publication internationale:
**WO 2022/023633 (03.02.2022 Gazette 2022/05)**

(54) **PROCÉDÉ DE CONTRÔLE AUTOMATIQUE DE QUALITÉ D'UNE PIÈCE AÉRONAUTIQUE**

VERFAHREN ZUR AUTOMATISCHEN QUALITÄTSPRÜFUNG EINES AERONAUTISCHEN TEILS

METHOD FOR AUTOMATIC QUALITY INSPECTION OF AN AERONAUTICAL PART

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.07.2020 FR 2007866**

(43) Date de publication de la demande:
**07.06.2023 Bulletin 2023/23**

(73) Titulaire: **SAFRAN**
**75015 Paris (FR)**

(72) Inventeurs:
- **PICARD, Sylvaine**
  **77550 MOISSY-CRAMAYEL (FR)**
- **BELKHIR, Nacim**
  **77550 MOISSY-CRAMAYEL (FR)**
- **SARTOR, Enrico**
  **77550 MOISSY-CRAMAYEL (FR)**

(74) Mandataire: **Cabinet Camus Lebkiri
25 rue de Maubeuge
75009 Paris (FR)**

(56) Documents cités:
- **BELTRAN-GONZALEZ CARLOS ET AL: "External
  and internal quality inspection of aerospace
  components", 2020 IEEE 7TH INTERNATIONAL
  WORKSHOP ON METROLOGY FOR
  AEROSPACE (METROAEROSPACE), IEEE, 22
  June 2020 (2020-06-22), pages 351 - 355,
  XP033802043, DOI: 10.1109/
  METROAEROSPACE48742.2020.9160103**
- **SHASHANKA VENKATARAMANAN ET AL:
  "Attention Guided Anomaly Localization in
  Images", ARXIV.ORG, CORNELL UNIVERSITY
  LIBRARY, 201 OLIN LIBRARY CORNELL
  UNIVERSITY ITHACA, NY 14853, 19 November
  2019 (2019-11-19), XP081626372**
- **CHANG CHIH-WEN ET AL: "A Review of Artificial
  Intelligence Algorithms Used for Smart Machine
  Tools", INVENTIONS, vol. 3, no. 3, 27 June 2018
  (2018-06-27), pages 41, XP055788807, DOI:
  10.3390/inventions3030041**

EP 4 189 602 B1

• **BIAGIO MARCO SAN ET AL: "Automatic inspection of aeronautic components", MACHINE VISION AND APPLICATIONS, SPRINGER VERLAG, DE, vol. 28, no. 5, 20 May 2017 (2017-05-20), pages 591 - 605, XP036288274, ISSN: 0932-8092, [retrieved on 20170520], DOI: 10.1007/S00138-017-0839-1**
• **SUN JIA ET AL: "Surface Defects Detection Based on Adaptive Multiscale Image Collection and Convolutional Neural Networks", IEEE TRANSACTIONS ON INSTRUMENTATION AND MEASUREMENT, IEEE SERVICE CENTER, PISCATAWAY, NJ, US, vol. 68, no. 12, 1 December 2019 (2019-12-01), pages 4787 - 4797, XP011753952, ISSN: 0018-9456, [retrieved on 20191108], DOI: 10.1109/TIM.2019.2899478**

• **MAHALANOBIS P. C.: "On The Generalized Distance in Statistics", PROCEEDINGS OF THE NATIONAL INSTITUTE OF SCIENCES OF INDIA. 2 (1), 15 April 1936 (1936-04-15), pages 49 - 55, XP055788717, Retrieved from the Internet <URL:https://insa.nic.in/writereaddata/ UpLoadedFiles/PINSA/Vol02_1936_1_Art05.pdf> [retrieved on 20210323]**

(52) Classification Coopérative des Brevets (CPC):
(Cont.)G06T 2207/20084; G06T 2207/30164;
Y02P 90/02

## Description

### DOMAINE TECHNIQUE DE L'INVENTION

Le domaine technique de l'invention est celui des pièces aéronautiques et en particulier celui du contrôle de qualité des pièces aéronautiques.

La présente invention concerne un procédé de contrôle automatique de qualité d'une pièce aéronautique.

### ARRIERE-PLAN TECHNOLOGIQUE DE L'INVENTION

Pour détecter les défauts d'une pièce aéronautique, il est connu d'utiliser un réseau de neurones artificiels ayant été entraîné sur une base de données d'entraînement comportant des images de pièces aéronautiques avec des défauts et des images de pièces aéronautiques sans défaut. L'entraînement est réalisé de manière supervisée, c'est-à-dire que pour chaque image de la base de données d'entraînement, le réseau de neurones artificiels sait si l'image présente des défauts ou non. Beltran-Gonzalez et al. « External and internal quality inspection of aerospace components », 2020 IEEE 7th International Workshop on Metrology for Aero-Space, 22-24 juin 2020, pages 351-355, proposent un système d'inspection de pièces aéronautiques reposant essentiellement sur des réseaux de neurones convolutifs supervisés nécessitant donc des données labellisées pour chaque type de défaut connu.

Etant donné qu'il est impossible de connaître tous les défauts susceptibles d'affecter des pièces aéronautiques, la base de données d'entraînement n'est pas exhaustive. Le réseau de neurones auquel est soumis une image d'une pièce aéronautique avec un défaut qui n'était pas présent dans la base de données d'entraînement peut alors déclarer conforme la pièce aéronautique alors qu'elle comporte un défaut.

De même, le réseau de neurones auquel est soumis une image aberrante, c'est-à-dire une image présentant des caractéristiques différentes de celles utilisées pendant la phase d'apprentissage du réseau de neurones, d'une pièce aéronautique, par exemple, et non exhaustivement, une image de mauvaise qualité ou encore une image présentant un éclairage différent par rapport aux images de la base de données, peut déclarer non conforme la pièce aéronautique alors qu'elle ne comporte aucun défaut ou inversement la déclarer comme sans défaut alors qu'elle en présente un.

Il existe donc un besoin de pouvoir détecter tous les défauts d'une pièce aéronautique, que ces défauts soient connus a priori ou non, et de ne pas déclarer non conforme une pièce aéronautique ne présentant pas de défauts.

Il existe également un besoin de pouvoir détecter qu'une image soumise au réseau de neurone artificiel comporte des caractéristiques différentes de celles utilisées pendant son apprentissage, ce qui entraîne un risque de mauvais fonctionnement du réseau de neurones.

### RESUME DE L'INVENTION

L'invention permet de remédier aux inconvénients précités.

L'invention concerne un procédé de contrôle automatique de qualité d'une pièce aéronautique comportant les étapes suivantes :

- entraînement d'un réseau de neurones artificiels sur une première base de données d'entraînement ;
- acquisition d'au moins une image de la pièce aéronautique ;
- détection de défaut sur l'image de la pièce aéronautique à l'aide du réseau de neurones artificiels entraîné ;
- entraînement non supervisé d'un auto-encodeur sur une deuxième base de données d'entraînement comportant une pluralité d'images de pièces aéronautiques d'entraînement sans défaut, comportant les sous-étapes suivantes :

  - projection de chaque image de la deuxième base de données d'entraînement sur un espace mathématique de dimension réduite par rapport à la dimension de chaque image de la deuxième base de données d'entraînement, de sorte que l'ensemble des projections des images de la deuxième base de données dans l'espace mathématique suive une loi de probabilité prédéfinie ;
  - reconstruction de chaque image de la deuxième base de données d'entraînement à partir de la projection de l'image de la deuxième base de données d'entraînement sur l'espace mathématique pour obtenir une image reconstruite ;

- pour chaque image de la deuxième base de données d'entraînement, calcul d'une pluralité de métriques à partir de la projection de l'image de la deuxième base de données d'entraînement sur l'espace mathématique ou de l'image reconstruite correspondante, pour obtenir une valeur de métrique pour chaque métrique ;
- entraînement supervisé d'un classifieur à partir des valeurs de métriques obtenues ;
- détection de défaut ou d'anomalie de l'image de la pièce aéronautique à l'aide de l'auto-encodeur et du classifieur entraînés ;
- si le réseau de neurones artificiels détecte au moins un défaut sur l'image de la pièce aéronautique ou si le réseau de neurones artificiels ne détecte aucun défaut sur l'image de la pièce aéronautique et que le classifieur détecte au moins un défaut ou une anomalie de l'image de la pièce aéronautique, la pièce aéronautique est considérée comme non conforme ;
- sinon, la pièce aéronautique est considérée comme conforme.

Grâce à l'invention, le réseau de neurones artificiels utilisé pour la détection des défauts d'une pièce aéronautique est pourvu d'un module de surveillance comportant l'auto-encodeur et le classifieur, permettant de déterminer si le réseau de neurones artificiels a réalisé correctement ou non la tâche de détection. Pour cela, le module de surveillance réalise lui-même une détection basée, non pas sur des caractéristiques d'image comme le réseau de neurones, mais sur le calcul de métriques dépendant de la projection par l'auto-encodeur de l'image à tester dans l'espace mathématique, après un entraînement sur des images ne présentant pas de défauts, ce qui lui permet d'être plus robuste aux images aberrantes et aux images présentant des défauts inconnus. En effet, avec un entraînement basé sur des images présentant des défauts, le classifieur risque d'apprendre spécifiquement les types de défauts présents et de ne pas fonctionner correctement dans le cas d'images présentant des défauts non appris ou d'images complétement aberrantes.

Ainsi, si les performances de détection du réseau de neurones se dégradent car l'image à tester présente un défaut non connu du réseau de neurones ou que l'image à tester est aberrante, ce n'est pas le cas pour le module de surveillance qui peut signaler une anomalie quand les résultats de sa détection diffèrent de ceux de la détection du réseau de neurones.

De préférence, le calcul des métriques dépendant en partie de la projection par l'auto-encodeur de l'image à tester dans l'espace mathématique, on choisit comme auto-encodeur un auto-encodeur antagoniste ou bien un autoencodeur variationnel, ces auto-encodeurs permettant de mieux contrôler la distribution des projections des images sur l'espace mathématique, appelé espace latent.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon un aspect de l'invention, l'image de la pièce aéronautique, la pluralité d'images de la première base de données d'entraînement et la pluralité d'images de la deuxième base de données d'entraînement sont des images visibles, rayons X, ultrasons ou tomographiques.

Selon un aspect de l'invention, le procédé comporte en outre pour chaque métrique, une étape de répartition des valeurs de métrique des images de la deuxième base de données d'entraînement en un premier groupe de valeurs et en un deuxième groupe de valeurs selon un critère de validité prédéfini, le classifieur étant entraîné pour considérer les images de la deuxième base de données d'entraînement ayant les valeurs de métrique du premier groupe de valeurs comme ne présentant aucun défaut ni anomalie et les images de la deuxième base de données d'entraînement ayant les valeurs de métrique du deuxième groupe de valeurs comme images à rejeter.

Ainsi, il est possible de réaliser un entraînement supervisé du classifieur sans utiliser d'images présentant des défauts ou des anomalies pour ne pas risquer d'entacher le pouvoir de généralisation du classifieur.

Selon un aspect de l'invention, l'étape de détection de défaut sur l'image de la pièce aéronautique à l'aide de l'auto-encodeur et du classifieur entraînés comporte les sous-étapes suivantes :

- projection par l'auto-encodeur, de l'image de la pièce aéronautique sur l'espace mathématique ;
- reconstruction par l'auto-encodeur, de l'image de la pièce aéronautique à partir de la projection de l'image de la pièce aéronautique dans l'espace mathématique pour obtenir une image reconstruite de la pièce aéronautique

- calcul des métriques à partir de la projection de l'image de la pièce aéronautique sur l'espace mathématique ou à partir de l'image reconstruite de la pièce aéronautique pour obtenir des valeurs de métriques ;
- détection de défaut sur l'image de la pièce aéronautique par le classifieur à partir des valeurs de métriques obtenues pour l'image de la pièce aéronautique.

Selon un aspect de l'invention, la pluralité de métriques comporte, pour une image donnée, une distance entre la projection de l'image sur l'espace mathématique et l'ensemble des projections de la pluralité d'images de la deuxième base de données dans l'espace mathématique, et/ou une distance entre l'image et l'image reconstruite, et/ou une entropie des écarts entre l'image et l'image reconstruite.

Ainsi, une image dont la projection dans l'espace mathématique est éloignée de la loi de probabilité ou une image trop différente de son image reconstruite sera considérée comme présentant un défaut ou une anomalie par le classifieur.

Selon une variante de réalisation de l'aspect de l'invention précédent, la loi de probabilité est une loi gaussienne multivariée et la distance entre la projection de l'image sur l'espace mathématique et l'ensemble des projections de la pluralité d'images de la deuxième base de données dans l'espace mathématique est la distance de Mahalanobis.

Selon un aspect de l'invention, le procédé de l'invention comporte une étape de génération d'une alerte si le réseau de neurones artificiels ne détecte aucun défaut sur l'image de la pièce aéronautique et que le classifieur détecte au moins un défaut ou une anomalie sur l'image de la pièce aéronautique.

Ainsi, si le réseau de neurones artificiel n'a détecté aucun défaut mais que le module de surveillance a détecté un défaut ou une anomalie, une alerte est générée pour signaler que le réseau de neurones a échoué dans sa tâche de détection ou n'était pas en mesure de la réaliser correctement.

Selon un aspect de l'invention, l'entraînement du réseau de neurones artificiels peut être du type entraînement supervisé et la première base de données d'entraînement comporte une pluralité d'images de pièces aéronautiques d'entraînement avec ou sans défaut.

Selon un aspect de l'invention, l'entraînement du réseau de neurones artificiels peut aussi être un entraînement non supervisé et la première base de données d'entraînement comporte une pluralité d'images de pièces aéronautiques d'entraînement sans défaut.

L'invention concerne également un programme d'ordinateur comprenant des instructions de code de programme pour l'exécution des étapes du procédé selon l'invention lorsque ledit programme est exécuté sur un ordinateur.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 est un schéma synoptique illustrant l'enchaînement des étapes du procédé de l'invention.
- La figure 2 est une représentation schématique des première, quatrième, cinquième et sixième étapes du procédé selon l'invention.
- La figure 3 est une représentation schématique des troisième et septième étapes du procédé selon l'invention.
- La figure 4 est une matrice décisionnelle donnant la ou les étapes du procédé de l'invention réalisées en fonction du résultat de la détection du réseau de neurones artificiels et du résultat de la détection du classifieur.

## DESCRIPTION DETAILLEE

Sauf précision contraire, un même élément apparaissant sur des figures différentes présente une référence unique.

L'invention concerne un procédé automatique de contrôle de la qualité d'une pièce aéronautique.

Le procédé est automatique, c'est-à-dire qu'il est mis en œuvre par un calculateur.

Dans le contexte de l'invention, on entend par « contrôle de la qualité d'une pièce », la détermination de la conformité ou non de la pièce, c'est-à-dire que la pièce est considérée comme conforme si aucun défaut n'a été détecté sur la pièce et non conforme si au moins un défaut a été détecté sur la pièce.

On entend par image aberrante ou présentant une anomalie, une image qui comporte des caractéristiques différentes de celles utilisées pendant l'apprentissage du réseau de neurones artificiels ou bien comportant un défaut.

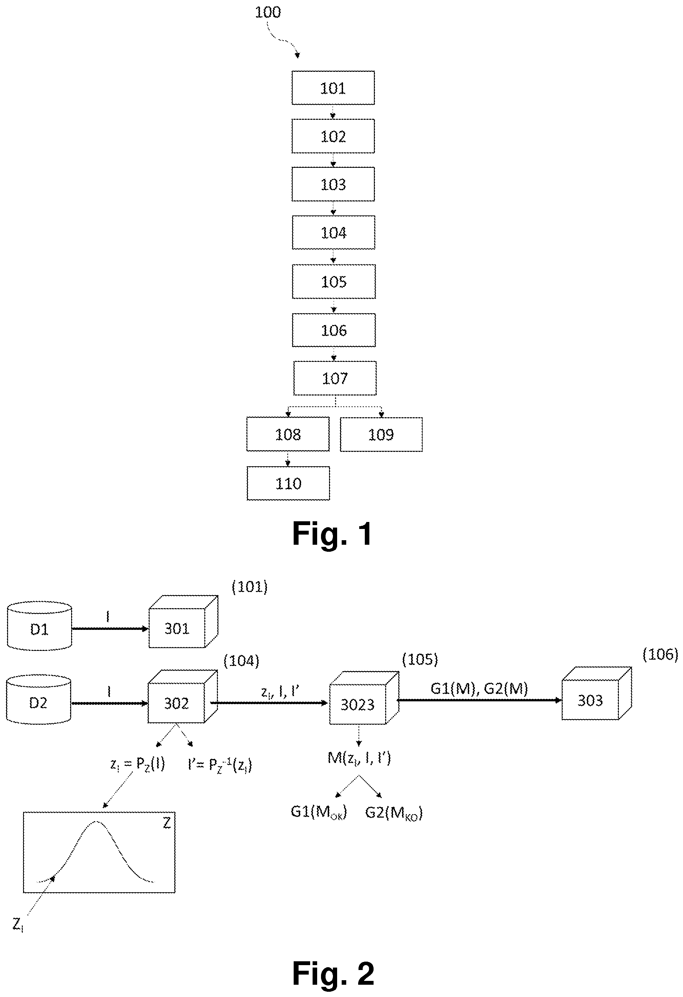

[Fig. 1] La figure 1 est un schéma synoptique illustrant l'enchaînement des étapes du procédé 100 de l'invention.
[Fig. 2] La figure 2 est une représentation schématique des première 101, quatrième 104, cinquième 105 et sixième 106 étapes du procédé 100 selon l'invention.

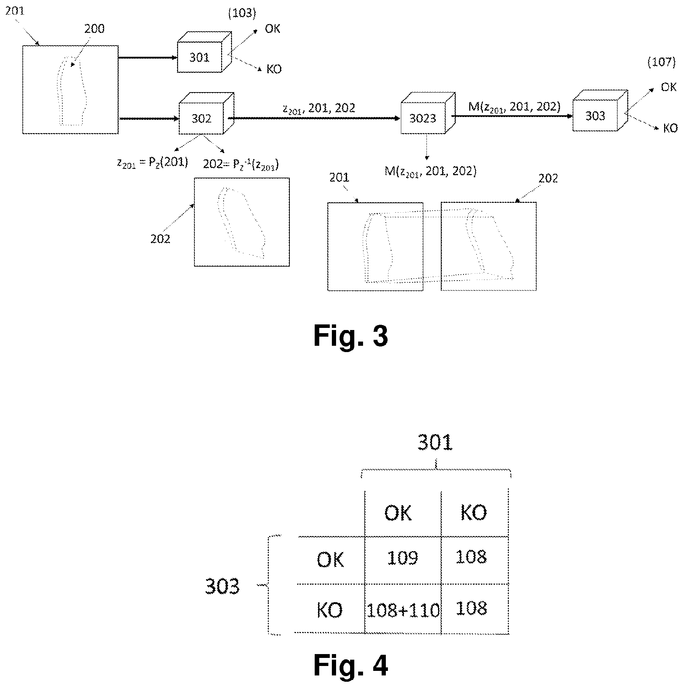

[Fig. 3] La figure 3 est une représentation schématique des troisième 103 et septième 107 étapes du procédé 100 selon l'invention.

La première étape 101 du procédé 100 consiste à entraîner un réseau de neurones artificiels 301 sur une première base de données d'entraînement D1.

La première base de données d'entraînement D1 comporte une pluralité d'images de pièces aéronautiques d'entraînement I.

Dans la suite de la demande, on utilisera indifféremment les termes de « réseau de neurones « et de « réseau de neurones artificiels ».

Un réseau de neurones artificiels 301 peut être par exemple du type MLP pour « Multi-Layer Perceptron », c'est-à-dire qu'il comporte au moins deux couches comportant chacune au moins un neurone artificiel. Une connexion entre deux neurones est appelée une synapse. Chaque synapse est affectée d'un coefficient synaptique.

Chaque neurone de chaque couche est par exemple connecté à chaque neurone de la couche précédente et à chaque neurone de la couche suivante. Les neurones d'une même couche ne sont par exemple pas connectés entre eux.

Le réseau de neurones artificiels 301 peut également être du type ResNet (https://arxiv.org/abs/1512.03385v1), ou UNet (https://arxiv.org/abs/1505.04597) ou SegNet (https://arxiv.org/abs/1511.00561) ou avoir toute autre architecture permettant de réaliser une tache de segmentation sémantique, de détection ou de classification.

La première étape 101 d'entraînement du réseau de neurones artificiels 301, autrement appelée étape d'apprentissage, consiste à déterminer les coefficients synaptiques du réseau de neurones 301 à partir des images I de la première base de données d'entraînement D1.

Selon un premier mode de réalisation, l'entraînement est supervisé, c'est-à-dire qu'à chaque image I de la première base de données D1, appelée image d'entrée, est associée la même image dans laquelle sont identifiés les défauts, appelée image de sortie vraie.

Ainsi, la première étape 101 d'entraînement consiste à parcourir la première base de données d'entraînement D1 et, pour chaque image I d'entrée fournie au réseau de neurones artificiels 301, à mettre à jour les coefficients synaptiques à l'aide d'un algorithme d'optimisation, pour minimiser l'écart entre l'image de sortie fournie par le réseau de neurones artificiels 301 et l'image de sortie vraie associée à l'image d'entrée I.

Pour réaliser cet entraînement supervisé, le réseau de neurones artificiels 301 peut être entraîné pour affecter la classe « défaut » ou la classe « pas défaut » à une image.

En variante, le réseau de neurones artificiels 301 peut être entraîné à estimer une boîte englobante autour des défauts présents dans l'image.

Selon un deuxième mode de réalisation, l'entraînement est non supervisé, c'est-à-dire que seules les images I de la première base de données D1 sont fournies au réseau de neurones 301.

Dans le deuxième mode de réalisation, la première base de données d'entraînement D1 comporte uniquement des images I ne présentant aucun défaut.

Une deuxième étape 102 du procédé 100 consiste à acquérir au moins une image 201 de la pièce aéronautique 200 à contrôler.

L'image 201 de la pièce aéronautique 200 à contrôler peut être une image visible acquise par une caméra industrielle, une image rayons X acquise par exemple par radiographie, une image ultrasons acquise par exemple par échographie ou encore une image tomographique acquise par un tomographe.

Les images I de la première base de données d'entraînement D1 sont de même type que l'image 201 de la pièce aéronautique 200 acquise à la deuxième étape 102. Ainsi, par exemple, si l'image 201 de la pièce aéronautique 200 est acquise par échographie, les images I de la première base de données d'entraînement D1 sont également acquises par échographie.

L'ordre des première étape 101 et deuxième étape 102 pourrait être inversé, c'est-à-dire que la deuxième étape 102 pourrait être réalisée avant la première étape 101.

La troisième étape 103 du procédé 100 consiste, pour le réseau de neurones artificiels 301 entraîné à la première étape 101, à détecter les éventuels défauts présents sur l'image 201 de la pièce aéronautique 200 acquise à la deuxième étape 102.

Comme représenté sur la figure 3, à l'issue de la troisième étape 103, le réseau de neurones 301 peut fournir un label indiquant s'il a détecté un défaut ou non sur l'image 201 de la pièce aéronautique 200, c'est-à-dire ayant un premier label pour la classe « défaut » et un deuxième label pour la classe « sans défaut ». Sur la figure 3, le réseau de neurones 301 renvoie le label KO s'il a détecté un défaut sur l'image 201 de la pièce aéronautique 200 ou le label OK s'il n'a détecté aucun défaut sur l'image 201 de la pièce aéronautique 200.

Le réseau de neurones 301 pourrait également fournir l'image 201 de la pièce aéronautique 200 dans laquelle il aurait encadré les défauts détectés et éventuellement affecter à chaque défaut encadré, un type de défaut.

La quatrième étape 104 du procédé 100 consiste à entraîner un auto-encodeur 302 sur une deuxième base de données d'entraînement D2.

On entend par « auto-encodeur », un algorithme d'apprentissage non supervisé basé sur un réseau de neurones artificiels, permettant de construire une nouvelle représentation d'un jeu de données, en général de dimension réduite par rapport à la dimension du jeu de données. Pour cela, l'auto-encodeur projette le jeu de données sur un espace mathématique de dimension réduite par rapport à la dimension du jeu de données.

Classiquement, un auto-encodeur comporte un encodeur et un décodeur. L'encodeur construit la représentation de dimension réduite à partir d'un jeu de données initial et le décodeur reconstruit le jeu de données à partir de la représentation de dimension réduite.

L'encodeur de l'auto-encodeur réalise un enchaînement d'opérations fonction de l'architecture de réseau de neurones artificiels, et en particulier du type de couches de neurones artificiels constituant le réseau de neurones artificiels. Une couche de convolution est un exemple de type de couches. A partir d'un choix judicieux de paramètres pour chaque couche du réseau de neurones artificiels, l'objectif de l'encodeur est de transformer et réduire spatialement la taille du jeu de données initial, fourni en entrée du réseau de neurones artificiels, pour obtenir un vecteur, c'est-à-dire un ensemble de variables, qui ne va conserver que l'information la plus pertinente du jeu de données initial. L'objectif de l'encodeur est donc de transformer les jeux de données initiaux d'un espace « initial » vers un espace « mathématique » ou « numérique » de moindre dimension, qui permet de décrire les jeux de données d'entrée sous la forme réduite d'un vecteur.

La quatrième étape 104 consiste à mettre à jour les paramètres de l'auto-encodeur 302, c'est-à-dire les coefficients synaptiques du réseau de neurones composant l'auto-encodeur 302, pour minimiser l'erreur entre le jeu de donnée reconstruit et le jeu de données initial.

Ainsi, l'entraînement de l'auto-encodeur 302 est un entraînement non supervisé et la deuxième base de données d'entraînement D2 comporte une pluralité d'images de pièces aéronautiques d'entraînement I ne présentant pas de défaut.

Dans le contexte de l'invention, un jeu de données est une image, ou un ensemble d'images, 2D ou 3D.

Sur la figure 3, l'encodeur de l'auto-encodeur 302 projette par une opération de projection $P_Z$, les images I de la deuxième base de données d'entraînement D2 sur l'espace mathématique Z, chaque image I de la deuxième base de données d'entraînement D2 ayant une projection $z_I$ sur l'espace mathématique Z. Le décodeur de l'auto-encodeur 302 reconstruit par une opération inverse $P_Z^{-1}$ de l'opération de projection $P_Z$, chaque image I de la deuxième base de données d'entraînement D2 à partir de la projection $z_I$ sur l'espace mathématique Z de l'image I pour obtenir une image reconstruite I'.

La quatrième étape 104 consiste donc à mettre à jour les paramètres de l'auto-encodeur 302 pour minimiser l'erreur entre chaque image I de la deuxième base de données d'entraînement D2 et l'image reconstruite I' correspondante.

L'auto-encodeur 302 est par de préférence un auto-encodeur variationnel (ou « variationnal autoencodeur » en anglais) ou encore un auto-encodeur antagoniste (ou « adversarial autoencodeur » en anglais), qui permettent de mieux contrôler la distribution des projections $z_I$ dans l'espace mathématique Z (dit espace latent).

L'auto-encodeur 302 est entraîné de sorte que l'ensemble $Z_I$ des projections $z_I$ de la pluralité d'images I de la deuxième base de données D2 dans l'espace mathématique Z suive une loi de probabilité prédéfinie.

La loi de probabilité est par exemple une loi uniforme ou une loi gaussienne multivariée.

Sur la figure 3, la loi de probabilité est une loi normale.

Les images I de la deuxième base de données d'entraînement D2 sont de même type que l'image 201 de la pièce aéronautique 200 acquise à la deuxième étape 102 et que les images I de la première base de données d'entraînement D1. Ainsi, par exemple, si l'image 201 de la pièce aéronautique 200 est acquise par échographie, les images I de la deuxième base de données d'entraînement D2 sont également acquises par échographie.

Dans le premier mode de réalisation dans lequel la première étape 101 d'entraînement du réseau de neurones artificiels 301 sur la première base de données d'entraînement D1 est un entraînement supervisé, la deuxième base de de données d'entraînement D2 peut être la partie de la première base de données d'entraînement D1 comportant des images I ne présentant aucun défaut.

Dans le deuxième mode de réalisation dans lequel la première étape 101 d'entraînement du réseau de neurones artificiels 301 sur la première base de données d'entraînement D1 est un entraînement non supervisé, la première base de données d'entraînement D1 et la deuxième base de de données d'entraînement D2 peuvent être une seule et même base de données d'entraînement. Les images comportant des défauts sont utilisées pour observer le comportement de l'autoencodeur et des métriques au moment du développement de la solution.

La cinquième étape 105 du procédé 100 consiste à calculer une pluralité de métriques M à partir de la projection $z_I$ de chaque image I de la deuxième base de données D2 dans l'espace mathématique Z ou de l'image reconstruite I' correspondante.

Pour une image I donnée, la pluralité de métriques M comporte par exemple une distance entre la projection $z_I$ de l'image I donnée sur l'espace mathématique Z et l'ensemble $Z_I$ des projections $z_I$ de la pluralité d'images I de la deuxième base de données d'entraînement D2 dans l'espace mathématique Z, et/ou une distance, par exemple de type norme L1, L2, L∞ ou autre, entre l'image I donnée et l'image reconstruite I' correspondante et/ou une entropie sur les écarts entre l'image I donnée et l'image reconstruite I' correspondante.

Si l'ensemble $Z_I$ des projections $z_I$ des images I de la deuxième base de données d'entraînement D2 suit une loi gaussienne multivariée de moyenne μ et de covariance Cov dans l'espace mathématique Z, la distance entre la projection $z_I$ de l'image I donnée sur l'espace mathématique Z et l'ensemble $Z_I$ des projections $z_I$ de la pluralité d'images I de la deuxième base de données d'entrainement D2 dans l'espace mathématique Z est par exemple la distance de Mahalanobis Maha se définissant comme :

$$Maha(z_I) = \sqrt{(z_I - \mu)^T Cov_Z^{-1}(z_I - \mu)}$$

L'entropie H sur les écarts entre l'image I donnée et l'image reconstruite I' se définit par exemple comme :

$$H(I - I') = -\sum_{i=1}^{n} P_i(I - I')\log_i P_i(I - I')$$

Avec $P_i$(I-I'), l'écart entre l'image I et l'image reconstruite I correspondante pour le pixel Pi.

Sur la figure 2, la cinquième étape 105 est réalisée par le module 3023.

A l'issue de la cinquième étape 105, pour chaque image I de la deuxième base de données d'entraînement D2, une valeur de métrique M a été obtenue pour chaque métrique M.

La sixième étape 106 du procédé 100 consiste à entraîner de manière supervisée un classifieur 303 à partir des valeurs de métriques M obtenues à la cinquième étape 105.

Par exemple, pour chaque métrique M, les valeurs de métrique M obtenues à la cinquième étape 105 sont séparées en un premier groupe de valeurs G1 et un deuxième groupe de valeurs G2 selon un critère de validité prédéfini.

Le classifieur 303 est alors entraîné pour considérer les images I de la deuxième base de données d'entraînement D2 ayant les valeurs de métrique M du premier groupe de valeurs G1 comme ne présentant aucun défaut ou anomalie et les images I de la deuxième base de données d'entraînement D2 ayant les valeurs de métrique M du deuxième groupe de valeurs G2 comme présentant un défaut ou une anomalie.

Le critère de validité prédéfini est par exemple de placer les N valeurs de métrique M les plus mauvaises pour la métrique M donnée dans le deuxième groupe de valeurs G2 et de placer les autres valeurs de métrique M dans le premier groupe de valeurs G1. Ainsi, par exemple dans le cas où la métrique est la distance de Mahalanobis, le critère de validité consiste à placer les N valeurs de métrique M les plus importantes dans le deuxième groupe de valeurs G2 et les autres valeurs de métrique M dans le premier groupe de valeurs G1.

Les quatrième 104, cinquième 105 et sixième 106 étapes pourraient être réalisées avant la première étape 101 ou simultanément à la première étape 101.

La septième étape 107 du procédé 100 consiste, pour l'auto-encodeur 302 entraîné à la quatrième étape 104 et pour le classifieur 303 entraîné à la sixième étape 106, à détecter les éventuels défauts ou anomalies de l'image 201 de la pièce aéronautique 200 acquise à la deuxième étape 102.

Pour cela, l'encodeur de l'auto-encodeur 302 projette l'image 201 de la pièce aéronautique 200 sur l'espace mathématique Z et le décodeur de l'auto-encodeur 302 reconstruit l'image 201 de la pièce aéronautique 200 à partir de la projection $z_{201}$ de l'image 201 de la pièce aéronautique 200 sur l'espace mathématique Z pour obtenir une image reconstruite 202.

La pluralité de métriques M est calculée par le module 3023 à partir de la projection $z_{201}$ de l'image 201 de la pièce aéronautique 200 sur l'espace mathématique Z ou à partir de l'image reconstruite 202 de la pièce aéronautique 200.

Le classifieur 303 détecte alors les éventuels défauts ou anomalie(s) de l'image 201 de la pièce aéronautique 200 à partir des métriques M calculées pour l'image 201 de la pièce aéronautique 200.

Comme représenté sur la figure 3, à l'issue de la septième étape 107, le classifieur 303 peut fournir un label indiquant s'il a détecté un défaut ou une anomalie, ou non, de l'image 201 de la pièce aéronautique 200. Sur la figure 2, le classifieur 303 renvoie le label KO s'il a détecté un défaut ou une anomalie de l'image 201 de la pièce aéronautique 200 ou le label OK s'il n'a détecté aucun défaut et aucune anomalie dans l'image 201 de la pièce aéronautique 200.

La septième étape 107 peut être réalisée avant ou simultanément à la troisième étape 103.

[Fig. 4] La figure 4 est une matrice décisionnelle donnant la ou les étapes du procédé 100 réalisées en fonction du résultat de la détection du réseau de neurones artificiels 301 et du résultat de la détection du classifieur 303.

Si le réseau de neurones artificiels 301 détecte au moins un défaut sur l'image 201 de la pièce aéronautique 200, une huitième étape 108 du procédé 100 consistant à considérer la pièce aéronautique 200 comme non conforme est réalisée.

Si le réseau de neurones artificiels 301 ne détecte aucun défaut sur l'image 201 de la pièce aéronautique 200 et que le classifieur 303 détecte au moins un défaut ou une anomalie de l'image 201 de la pièce aéronautique 200, la huitième étape 108 est réalisée.

Dans ce cas, la huitième étape 108 est par exemple suivie d'une dixième étape 110 consistant à générer une alerte. L'alerte signale que le réseau de neurones 301 n'a pas réussi à détecter un défaut.

L'alerte peut par exemple conduire à un rebut automatique de la pièce aéronautique 200, à une expertise manuelle, ou encore au stockage de l'image 201 de la pièce aéronautique 200 dans la première base de données d'entraînement D1 pour un réentraînement du réseau de neurones 301.

Si le réseau de neurones artificiels 301 ne détecte aucun défaut sur l'image 201 de la pièce aéronautique 200 et que le classifieur 303 ne détecte aucun défaut ou anomalie de l'image 201 de la pièce aéronautique 200, une neuvième étape 109 du procédé 100 consistant à considérer la pièce aéronautique 201 comme conforme est réalisée.

## Revendications

1. Procédé (100) de contrôle automatique de qualité d'une pièce aéronautique (200), comportant les étapes suivantes :

   - entraînement d'un réseau de neurones artificiels (301) sur une première base de données d'entraînement (D1, 101) ;
   - acquisition d'au moins une image (201) de la pièce aéronautique (200, 102) ;
   - détection de défaut sur l'image (201) de la pièce aéronautique (200) à l'aide du réseau de neurones artificiels (301) entraîné (103) ;

   **caractérisé en ce qu'**il comporte en outre les étapes suivantes :

   - entraînement non supervisé d'un auto-encodeur (302) sur une deuxième base de données d'entraînement (D2) comportant une pluralité d'images de pièces aéronautiques d'entraînement (I) sans défaut (104), comportant les sous-étapes suivantes :

     o projection ($z_I$) de chaque image (I) de la deuxième base de données d'entraînement (D2) sur un espace mathématique (Z) de dimension réduite par rapport à la dimension de chaque image (I) de la deuxième base de données d'entraînement (D2), de sorte que l'ensemble ($Z_I$) des projections ($z_I$) des images (I) de la deuxième base de données (D2) dans l'espace mathématique (Z) suive une loi de probabilité prédéfinie ;
     o reconstruction de chaque image (I) de la deuxième base de données d'entraînement (D2) à partir de la projection ($z_I$) de l'image (I) de la deuxième base de données d'entraînement (D2) sur l'espace mathématique (Z) pour obtenir une image reconstruite (I') ;

- pour chaque image (I) de la deuxième base de données d'entraînement (D2), calcul d'une pluralité de métriques (M) à partir de la projection ($z_I$) de l'image (I) de la deuxième base de données d'entraînement (D2) sur l'espace mathématique (Z) ou de l'image reconstruite (I') correspondante, pour obtenir une valeur de métrique (M) pour chaque métrique (M, 105) ;

- entraînement supervisé d'un classifieur (303) à partir des valeurs de métriques (M) obtenues (106) ;

- détection de défaut ou d'anomalie de l'image (201) de la pièce aéronautique (200) à l'aide de l'auto-encodeur (302) et du classifieur (303) entraînés (107) ;

- si le réseau de neurones artificiels (301) détecte au moins un défaut sur l'image (201) de la pièce aéronautique (200) ou si le réseau de neurones artificiels (301) ne détecte aucun défaut sur l'image (201) de la pièce aéronautique (200) et que le classifieur (303) détecte au moins un défaut ou une anomalie de l'image (201) de la pièce aéronautique (200), la pièce aéronautique (200) est considérée comme non conforme (108) ;sinon, la pièce aéronautique (200) est considérée comme conforme (109).

2. Procédé (100) selon la revendication 1, **caractérisé en ce que** l'image (201) de la pièce aéronautique (200), la pluralité d'images (I) de la première base de données d'entraînement (D1) et la pluralité d'images (I) de la deuxième base de données d'entraînement (D2) sont des images visibles, rayons X, ultrasons ou tomographiques.

3. Procédé (100) selon l'une quelconque des revendications précédentes, **caractérisé en ce qu'**il comporte en outre pour chaque métrique (M), une étape de répartition des valeurs de métrique (M) des images (I) de la deuxième base de données d'entraînement (D2) en un premier groupe de valeurs (G1) et en un deuxième groupe de valeurs (G2) selon un critère de validité prédéfini, le classifieur (303) étant entraîné pour considérer les images (I) de la deuxième base de données d'entraînement (D2) ayant les valeurs de métrique (M) du premier groupe de valeurs (G1) comme ne présentant aucun défaut ni anomalie (OK) et les images (I) de la deuxième base de données d'entraînement (D2) ayant les valeurs de métrique (M) du deuxième groupe de valeurs (G2) comme images à rejeter (KO).

4. Procédé (100) selon l'une quelconque des revendications précédentes, **caractérisé en ce que** l'étape (107) de détection de défaut sur l'image (201) de la pièce aéronautique (200) à l'aide de l'auto-encodeur (302) et du classifieur (303) entraînés comporte les sous-étapes suivantes :

- projection par l'auto-encodeur (302), de l'image (201) de la pièce aéronautique (200) sur l'espace mathématique (Z) ;
- reconstruction par l'auto-encodeur (302), de l'image (201) de la pièce aéronautique (200) à partir de la projection ($z_{201}$) de l'image (201) de la pièce aéronautique (200) dans l'espace mathématique (Z) pour obtenir une image reconstruite (202) de la pièce aéronautique (200) ;
- calcul des métriques (M) à partir de la projection ($z_{201}$) de l'image (201) de la pièce aéronautique (200) sur l'espace mathématique (Z) ou à partir de l'image reconstruite (202) de la pièce aéronautique (200) pour obtenir des valeurs de métriques (M) ;
- détection de défaut sur l'image (201) de la pièce aéronautique (200) par le classifieur (303) à partir des valeurs de métriques (M) obtenues pour l'image (201) de la pièce aéronautique (200).

5. Procédé (100) selon l'une quelconque des revendications précédentes, dans lequel l'autoencodeur est de type autoencodeur-antogoniste ou variationnel.

6. Procédé (100) selon l'une quelconque des revendications précédentes, **caractérisé en ce que** la pluralité de métriques (M) comporte, pour une image (I, 201) donnée, une distance entre la projection ($z_I$, $z_{201}$) de l'image (I, 201) sur l'espace mathématique (Z) et l'ensemble ($Z_I$) des projections ($z_I$) de la pluralité d'images (I) de la deuxième base de données (D2) dans l'espace mathématique (Z), et/ou une distance entre l'image (I, 201) et l'image reconstruite (I', 202), et/ou une entropie des écarts entre l'image (I, 201) et l'image reconstruite (I', 202).

7. Procédé (100) selon la revendication 6, **caractérisé en ce que** la loi de probabilité est une loi gaussienne multivariée et la distance entre la projection ($z_I$, $z_{201}$) de l'image (I, 201) sur l'espace mathématique (Z) et l'ensemble ($Z_I$) des projections ($z_I$) de la pluralité d'images (I) de la deuxième base de données (D2) dans l'espace mathématique (Z) est la distance de Mahalanobis.

8. Procédé (100) selon l'une quelconque des revendications précédentes, **caractérisé en ce qu'**il comporte une étape (110) de génération d'une alerte si le réseau de neurones artificiels (301) ne détecte aucun défaut sur l'image (201) de la pièce aéronautique (200) et que le classifieur (303) détecte au moins un défaut ou une anomalie de l'image (201) de la pièce aéronautique (200).

9. Programme d'ordinateur comprenant des instructions de code de programme pour l'exécution des étapes du procédé (100) selon l'une quelconque des revendications 1 à 8 lorsque ledit programme est exécuté sur un ordinateur.

10. Procédé (100) selon l'une quelconque des revendications 1 à 8, **caractérisé en ce que** l'entraînement du réseau de neurones artificiels (301) est un entraînement supervisé et la première base de données d'entraînement (D1) comporte une pluralité d'images de pièces aéronautiques d'entraînement (I) avec ou sans défaut.

11. Procédé (100) selon l'une quelconque des revendications 1 à 8, **caractérisé en ce que** l'entraînement du réseau de neurones artificiels (301) est un entraînement non supervisé et la première base de données d'entraînement (D1) comporte une pluralité d'images de pièces aéronautiques d'entraînement (I) sans défaut.

**Patentansprüche**

1. Verfahren (100) zur automatischen Qualitätskontrolle eines Flugzeugteils (200), das folgende Schritte umfasst:

   - Trainieren eines künstlichen neuronalen Netzes (301) anhand einer ersten Trainingsdatenbank (D1, 101);
   - Erfassen mindestens eines Bildes (201) des Flugzeugteils (200, 102);
   - Erkennen von Fehlern auf dem Bild (201) des Flugzeugteils (200) mithilfe des trainierten (103) künstlichen neuronalen Netzes (301);

   **dadurch gekennzeichnet, dass** es außerdem die folgenden Schritte umfasst:

   - unüberwachtes Trainieren eines Autoencoders (302) anhand einer zweiten Trainingsdatenbank (D2) mit einer Vielzahl von Bildern von fehlerfreien (104) Trainingsflugzeugteilen (I), mit den folgenden Teilschritten:

     ◦ Projektion ($z_I$) jedes Bildes (I) der zweiten Trainingsdatenbank (D2) auf einen mathematischen Raum (Z) mit reduzierter Dimension im Vergleich zur Dimension jedes Bildes (I) der zweiten Trainingsdatenbank (D2), sodass die Gesamtheit (Zi) der Projektionen ($z_I$) der Bilder (I) der zweiten Datenbank (D2) im mathematischen Raum (Z) einer vordefinierten Wahrscheinlichkeitsverteilung folgt;
     ◦ Rekonstruktion jedes Bildes (I) der zweiten Trainingsdatenbank (D2) ausgehend von der Projektion ($z_I$) des Bildes (I) der zweiten Trainingsdatenbank (D2) auf den mathematischen Raum (Z), um ein rekonstruiertes Bild (I') zu erhalten;

   - für jedes Bild (I) der zweiten Trainingsdatenbank (D2) Berechnung einer Vielzahl von Metriken (M) aus der Projektion ($z_I$) des Bildes (I) der zweiten Trainingsdatenbank (D2) auf den mathematischen Raum (Z) oder des entsprechenden rekonstruierten Bildes (I'), um einen Metrikwert (M) für jede Metrik (M, 105) zu erhalten;
   - überwachtes Trainieren eines Klassifikators (303) anhand der erhaltenen Metrikwerte (M) (106);
   - Erkennung eines Fehlers oder einer Anomalie des Bildes (201) des Flugzeugteils (200) mithilfe des trainierten Autoencoders (302) und des trainierten Klassifikators (303) (107);
   - wenn das künstliche neuronale Netz (301) mindestens einen Fehler auf dem Bild (201) des Flugzeugteils (200) erkennt oder wenn das künstliche neuronale Netz (301) keinen Fehler auf dem Bild (201) des Flugzeugteils (200) erkennt und der Klassifikator (303) mindestens einen Fehler oder eine Anomalie im Bild (201) des Flugzeugteils (200) erkennt, wird das Flugzeugteil (200) als nicht konform (108) angesehen; andernfalls wird das Flugzeugteil (200) als konform (109) angesehen.

2. Verfahren (100) nach Anspruch 1, **dadurch gekennzeichnet, dass** das Bild (201) des Flugzeugteils (200), die Vielzahl von Bildern (I) der ersten Trainingsdatenbank (D1) und die Vielzahl von Bildern (I) der zweiten Trainingsdatenbank (D2) sichtbare Bilder, Röntgenbilder, Ultraschallbilder oder tomografische Bilder sind.

3. Verfahren (100) nach einem der vorstehenden Ansprüche, **dadurch gekennzeichnet, dass** es für jede Metrik (M) zusätzlich einen Schritt zum Aufteilen der Metrikwerte (M) der Bilder (I) der zweiten Trainingsdatenbank (D2) in eine erste Gruppe von Werten (G1) und eine zweite Gruppe von Werten (G2) gemäß einem vordefinierten Gültigkeitskriterium umfasst, wobei der Klassifikator (303) so trainiert ist, dass er die Bilder (I) der zweiten Trainingsdatenbank (D2) mit den Metrikwerten (M) der ersten Gruppe von Werten (G1) als fehler- und anomaliefrei (OK) und die Bilder (I) der zweiten Trainingsdatenbank (D2) mit den Metrikwerten (M) der zweiten Gruppe von Werten (G2) als zu verwerfende Bilder (KO) betrachtet.

4. Verfahren (100) nach einem der vorstehenden Ansprüche, **dadurch gekennzeichnet, dass** der Schritt (107) zum Erkennen von Fehlern auf dem Bild (201) des Flugzeugteils (200) mithilfe des trainierten Autoencoders (302) und des trainierten Klassifikators (303) die folgenden Teilschritte umfasst:

- Projektion des Bildes (201) des Flugzeugteils (200) durch den Autoencoder (302) auf den mathematischen Raum (Z);
- Rekonstruktion des Bildes (201) des Flugzeugteils (200) durch den Autoencoder (302) aus der Projektion ($z_{201}$) des Bildes (201) des Flugzeugteils (200) in den mathematischen Raum (Z), um ein rekonstruiertes Bild (202) des Flugzeugteils (200) zu erhalten;
- Berechnung der Metriken (M) aus der Projektion ($z_{201}$) des Bildes (201) des Flugzeugteils (200) auf den mathematischen Raum (Z) oder aus dem rekonstruierten Bild (202) des Flugzeugteils (200), um Metrikwerte (M) zu erhalten;
- Erkennung von Fehlern auf dem Bild (201) des Flugzeugteils (200) durch den Klassifikator (303) anhand der für das Bild (201) des Flugzeugteils (200) erhaltenen Metrikwerte (M).

5. Verfahren (100) nach einem der vorstehenden Ansprüche, bei dem der Autoencoder vom Typ Antagonist-Autoencoder oder Variations-Autoencoder ist.

6. Verfahren (100) nach einem der vorstehenden Ansprüche, **dadurch gekennzeichnet, dass** die Vielzahl von Metriken (M) für ein gegebenes Bild (I, 201) einen Abstand zwischen der Projektion ($z_I$, $z_{201}$) des Bildes (I, 201) auf den mathematischen Raum (Z) und die Gesamtheit ($Z_I$) der Projektionen ($z_I$) der Vielzahl von Bildern (I) der zweiten Datenbank (D2) im mathematischen Raum (Z) und/oder einen Abstand zwischen dem Bild (I, 201) und dem rekonstruierten Bild (I', 202) und/oder eine Entropie der Abweichungen zwischen dem Bild (I, 201) und dem rekonstruierten Bild (I', 202) umfasst.

7. Verfahren (100) nach Anspruch 6, **dadurch gekennzeichnet, dass** die Wahrscheinlichkeitsverteilung eine multivariate Gauß-Verteilung ist und der Abstand zwischen der Projektion ($z_I$, $z_{201}$) des Bildes (I, 201) auf den mathematischen Raum (Z) und die Gesamtheit ($Z_I$) der Projektionen ($z_I$) der Vielzahl von Bildern (I) der zweiten Datenbank (D2) im mathematischen Raum (Z) der Mahalanobis-Abstand ist.

8. Verfahren (100) nach einem der vorstehenden Ansprüche, **dadurch gekennzeichnet, dass** es einen Schritt (110) zum Erzeugen einer Warnung umfasst, wenn das künstliche neuronale Netz (301) keinen Fehler auf dem Bild (201) des Flugzeugteils (200) erkennt und der Klassifikator (303) mindestens einen Fehler oder eine Anomalie im Bild (201) des Flugzeugteils (200) erkennt.

9. Computerprogramm, das Programmcodeanweisungen zur Ausführung der Schritte des Verfahrens (100) gemäß einem der Ansprüche 1 bis 8 umfasst, wenn das Programm auf einem Computer ausgeführt wird.

10. Verfahren (100) nach einem der Ansprüche 1 bis 8, **dadurch gekennzeichnet, dass** das Training des künstlichen neuronalen Netzes (301) ein überwachtes Training ist und die erste Trainingsdatenbank (D1) eine Vielzahl von Bildern (I) von Flugzeugteilen zum Training mit oder ohne Fehler enthält.

11. Verfahren (100) nach einem der Ansprüche 1 bis 8, **dadurch gekennzeichnet, dass** das Training des künstlichen neuronalen Netzes (301) ein unüberwachtes Training ist und die erste Trainingsdatenbank (D1) eine Vielzahl von Bildern von fehlerfreien Flugzeugteilen (I) zum Training umfasst.

**Claims**

1. Method (100) for automatic quality inspection of an aeronautical part (200), comprising the following steps:

- training an artificial neural network (301) on a first training database (D1, 101);
- acquiring at least one image (201) of the aeronautical part (200, 102);
- detecting faults on the image (201) of the aeronautical part (200) using the trained (103) artificial neural network (301);

**characterised in that** it also further comprises the following steps:

- unsupervised training of an auto-encoder (302) on a second training database (D2) comprising a plurality of training images of aeronautical parts (I) without fault (104), comprising the following sub-steps:

  ∘ projecting (zi) each image (I) of the second training database (D2) on a mathematical space (Z) of smaller dimension than the dimension of each image (I) of the second training database (D2), so that the set ($Z_I$) of projections (zi) of the images (I) of the second database (D2) in the mathematical space (Z) follows a predefined probability law;

○ reconstructing each image (I) of the second training database (D2) from the projection (zi) of the image (I) of the second training database (D2) onto the mathematical space (Z) to obtain a reconstructed image (I');

- for each image (I) of the second training database (D2), calculating a plurality of metrics (M) from the projection (zi) of the image (I) of the second training database (D2) onto the mathematical space (Z) or from the corresponding reconstructed image (I'), to obtain a metric value (M) for each metric (M, 105);
- supervised training of a classifier (303) from the metric values (M) obtained (106);
- detecting faults or anomalies in the image (201) of the aeronautical part (200) using the trained (107) auto-encoder (302) and classifier (303);
- if the artificial neural network (301) detects at least one fault on the image (201) of the aeronautical part (200) or if the artificial neural network (301) detects no fault on the image (201) of the aeronautical part (200) and the classifier (303) detects at least one fault or anomaly in the image (201) of the aeronautical part (200), the aeronautical part (200) is considered non-compliant (108); otherwise, the aeronautical part (200) is considered compliant (109).

2. Method (100) according to claim 1, **characterised in that** the image (201) of the aeronautical part (200), the plurality of images (I) of the first training database (D1) and the plurality of images (I) of the second training database (D2) are visible, X-rays, ultrasound or tomography images.

3. Method (100) according to any one of the preceding claims, **characterised in that** it further comprises for each metric (M), a step of distributing the metric values (M) of the images (I) of the second training database (D2) into a first group of values (G1) and a second group of values (G2) according to a predefined validity criterion, the classifier (303) being trained to consider the images (I) of the second training database (D2) having the metric values (M) of the first group of values (G1) as having no faults or anomalies (OK) and the images (I) of the second training database (D2) having the metric values (M) of the second group of values (G2) as images to be rejected (KO).

4. Method (100) according to any one of the preceding claims, **characterised in that** the step (107) of detecting a fault on the image (201) of the aeronautical part (200) using the trained auto-encoder (302) and classifier (303) comprises the following sub-steps:

- projecting, by the auto-encoder (302), of the image (201) of the aeronautical part (200) onto the mathematical space (Z);
- reconstructing, by the auto-encoder (302), of the image (201) of the aeronautical part (200) from the projection ($z_{201}$) of the image (201) of the aeronautical part (200) onto the mathematical space (Z) to obtain a reconstructed image (202) of the aeronautical part (200);
- calculating metrics (M) from the projection ($z_{201}$) of the image (201) of the aeronautical part (200) onto the mathematical space (Z) or from the reconstructed image (202) of the aeronautical part (200) to obtain metric values (M);
- detecting faults on the image (201) of the aeronautical part (200) by the classifier (303) from the metric values (M) obtained for the image (201) of the aeronautical part (200).

5. Method (100) according to any of the preceding claims, wherein the auto-encoder is an auto-encoder of variational type or of adversarial type.

6. Method (100) according to any of the preceding claims, **characterised in that** the plurality of metrics (M) comprises, for a given image (I, 201), a distance between the projection (zi, $z_{201}$) of the image (I, 201) on the mathematical space (Z) and the set (Zi) of the projections (zi) of the plurality of images (I) of the second database (D2) in the mathematical space (Z), and/or a distance between the image (I, 201) and the reconstructed image (I', 202), and/or an entropy of the gaps between the image (1, 201) and the reconstructed image (I', 202).

7. Method (100) according to claim 6, **characterised in that** the law of probability is a multivariate Gaussian law and the distance between the projection (zi, $z_{201}$) of the image (I, 201) onto the mathematical space (Z) and the set (Zi) of the projections (zi) of the plurality of images (I) of the second database (D2) onto the mathematical space (Z) is the Mahalanobis distance.

8. Method (100) according to any one of the preceding claims, **characterised in that** it comprises a step (110) of generating an alert if the artificial neural network (301) detects no fault on the image (201) of the aeronautical part (200) and the classifier (303) detects at least one fault or anomaly in the image (201) of the aeronautical part (200).

9. Computer program comprising program code instructions for the execution of the steps of the method (100) according to any one of claims 1 to 8 when said program is executed on a computer.

10. Method (100) according to any one of claims 1 to 8, **characterised in that** the training of the artificial neural network (301) is a supervised training and the first training database (D1) comprises a plurality of training images of aeronautical parts (I) with or without fault.

11. Method (100) according to any one of claims 1 to 8, **characterised in that** the training of the artificial neural network (301) is an unsupervised training and the first training database (D1) comprises a plurality of training images of aeronautical parts (I) without fault.

**Fig. 1**

**Fig. 2**

(103)

201
200
301 → OK
→ KO

(107)
302 → $z_{201}$, 201, 202 → 3023 → M($z_{201}$, 201, 202) → 303 → OK
→ KO

$z_{201} = P_2(201)$    $202 = P_2^{-1}(z_{201})$

202

M($z_{201}$, 201, 202)

201    202

## Fig. 3

301

|  | OK | KO |
|---|---|---|
| OK | 109 | 108 |
| KO | 108+110 | 108 |

303

## Fig. 4

## RÉFÉRENCES CITÉES DANS LA DESCRIPTION

**Littérature non-brevet citée dans la description**

- **BELTRAN-GONZALEZ et al.** External and internal quality inspection of aerospace components. *2020 IEEE 7th International Workshop on Metrology for AeroSpace*, 22 July 2020, 351-355